(19)

Europäisches Patentamt
European Patent Office
Office européen des brevets

(11) **EP 3 364 309 B1**

(12) **EUROPEAN PATENT SPECIFICATION**

(45) Date of publication and mention
of the grant of the patent:
**30.06.2021   Bulletin 2021/26**

(21) Application number: **16854910.3**

(22) Date of filing: **10.10.2016**

(51) Int Cl.:
***G06F 16/215*** *(2019.01)*

(86) International application number:
**PCT/CN2016/101639**

(87) International publication number:
**WO 2017/063531 (20.04.2017 Gazette 2017/16)**

(54) **ACCOUNT MAPPING METHOD AND DEVICE BASED ON ADDRESS INFORMATION**

KONTOZUORDNUNGSVERFAHREN UND VORRICHTUNG AUF DER BASIS VON ADRESSENINFORMATIONEN

PROCÉDÉ ET DISPOSITIF DE MAPPAGE DE COMPTES BASÉS SUR DES INFORMATIONS D'ADRESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **14.10.2015   CN 201510661892**

(43) Date of publication of application:
**22.08.2018   Bulletin 2018/34**

(73) Proprietor: **Advanced New Technologies Co., Ltd. George Town, Grand Cayman KY1-9008 (KY)**

(72) Inventors:
• **ZHOU, Yang**
**Hangzhou 310099 (CN)**
• **XIONG, Jun**
**Hangzhou 310099 (CN)**

• **HE, Dijun**
**Hangzhou 310099 (CN)**

(74) Representative: **Fish & Richardson P.C.**
**Highlight Business Towers**
**Mies-van-der-Rohe-Straße 8**
**80807 München (DE)**

(56) References cited:
**WO-A1-2014/160582      CN-A- 101 882 163**
**CN-A- 102 932 414      CN-A- 104 573 057**
**CN-A- 104 767 672      CN-A- 104 954 322**

• **OANA GOGA: "Matching user accounts across online social networks : methods and applications", COMPUTER SCIENCE , LIP6, 21 May 2014 (2014-05-21), XP055408010,**

**Description**

The present application claims priority to Chinese Patent Application No. 201510661892.4 filed on October 14, 2015 and entitled "ACCOUNT MAPPING METHOD AND APPARATUS BASED ON ADDRESS INFORMATION".

**Technical Field**

The present application relates to the field of network technologies, and in particular, to an account mapping method and apparatus based on address information.

**Background Art**

With the development of Internet information technologies, it is increasingly common for various service providers to provide services for users over the Internet. For example, users are generally required to pay for their living expenses, such as electricity and water bills, and they can already make these payments over the Internet.

At present, a user can generally pay for living expenses by using application software provided by an application service provider. During payment, the user needs to enter a payment account number provided by a charging service provider. However, user experience is relatively poor as the payment account number is inconvenient for the user to memorize.

An application service provider usually has its own account system, including an application account number, user address information and so on, so as to provide users with a variety of different services. For example, in addition to the service of paying for living expenses, the application service provider can also provide the users with an information recommendation service, an article acquisition service, and so on. A charging service provider for collecting payments for living expenses also has its own account system, including a payment account number, user address information and so on. It is thus clear that the application service provider can provide a payment service for a user directly through an application account number registered by the user if an association relation between the account system of the application service provider and the account system of the charging service provider can be established.

Currently, no related technologies can establish an association relation between different account systems.

Oana Goga: "Matching user accounts across online social networks: methods and applications", COMPUTER SCIENCE, LIP6, 21 May 2014, describes matching methods for finding a matching account of a given account in a social network in another large social network. It is considered that two account are matching if the same person manages them. The described method exploit different public information for users provided in their profiles.

**Summary of the Invention**

The invention is defined in the claims.

Embodiments of the present application provide an account mapping method and apparatus based on address information, for establishing an association relation between different account systems.

The present application provides an account mapping method based on address information, including:

extracting first address information respectively from multiple pieces of first account information provided by a first service provider, and extracting second address information respectively from multiple pieces of second account information provided by a second service provider;

for each piece of extracted first address information, searching various pieces of extracted second address information for second address information matching the first address information; and

after the second address information matching the first address information is found, establishing a mapping relation between the first account information to which the first address information belongs and the second account information to which the found second address information belongs.

After the step of extracting first address information respectively from multiple pieces of first account information provided by a first service provider, and extracting second address information respectively from multiple pieces of second account information provided by a second service provider, the method further includes:

extracting address feature information from various pieces of extracted first address information and second address information respectively; and

for each piece of extracted first address information, the step of searching various pieces of extracted second address information for second address information matching the first address information includes:

determining a candidate second address information set matching the first address information based on address feature information corresponding to the first address information and address feature information respectively corresponding to the various pieces of second address information, wherein each piece of second address information in the candidate second address information set and the first address information meet a preset address feature matching condition; and

selecting a piece of second address information matching the first address information from the determined candidate second address information set.

Optionally, the address feature information includes one or more of longitude and latitude information, point of interest (POI) information, and digit substring information; and

the preset address feature matching condition met by any piece of second address information in the candidate second address information set and the first address information includes one or more of the following conditions: a distance between longitudes and latitudes corresponding to the any piece of second address information and the first address information respectively is less than a set distance threshold;

POI information corresponding to the any piece of second address information and the first address information respectively is the same; and

a maximum value of the number of consecutively identical digit substrings between the any piece of second address information and the first address information is greater than a set number threshold, wherein each digit substring corresponds to a position range of an address, and different digit substrings of the same address correspond to different position ranges of the address.

Optionally, if the address feature information includes longitude and latitude information, longitude and latitude information corresponding to the extracted first address information and second address information is found by querying a longitude and latitude library in which a mapping relation between address information and longitudes and latitudes is stored;

if the address feature information includes POI information, the POI information is extracted from the first address information and the second address information based on preset keyword information corresponding to the POI information; and

if the address feature information includes digit substring information, the digit substring information is extracted from the first address information and the second address information based on a preset digit substring matching mode.

The POI information corresponding to the any piece of second address information and the first address information respectively is determined to be the same based on the following steps:

after it is determined that POI information exists in the any piece of second address information and the first address information, mapping the POI information in the any piece of second address information and the first address information into standardized POI information in the postal address library; and

determining that the POI information corresponding to the any piece of second address information and the first address information respectively is the same when the standardized POI information in the postal address library mapped from the any piece of second address information is the same as the standardized POI information in the postal address library mapped from the first address information.

Optionally, the step of extracting address feature information from various pieces of extracted first address information and second address information respectively includes:

extracting longitude and latitude information, POI information, and digit substring information from various pieces of extracted first address information and second address information respectively; and

the step of determining a candidate second address information set matching the first address information based on address feature information corresponding to the first address information and address feature information respectively corresponding to the various pieces of second address information includes:

determining, for each piece of second address information, whether POI information corresponding to the second address information and the first address information respectively is the same;

after it is determined that the POI information corresponding to the second address information and the first address information respectively is the same, determining a distance between longitudes and latitudes respectively corresponding to the second address information and the first address information based on the respective longitude and latitude information of the second address information and the first address information, and determining a maximum value of the number of consecutively identical digit substrings between the second address information and the first address information based on the respective digit substring information of the second address information and the first address information; and

incorporating the second address information into the candidate second address information set matching the first address information when the distance between longitudes and latitudes respectively corresponding to the second address information and the first address information is less than a set distance threshold and the maximum value of the number of consecutively identical digit substrings between the second address information and the first address information is greater than a set number threshold.

Optionally, the step of selecting a piece of second address information matching the first address information from the determined candidate second address information set includes:

determining a matching score between any piece of second address information in the determined candidate second address information set and the first address information, based on a longitude and latitude matching score and a longitude and latitude matching importance degree between the any piece of second address information and the first address information, as well as a digit substring matching score and a digit substring matching importance degree between the any piece of second address information and the first address information; and
selecting second address information corresponding to the highest matching score as the second address information matching the first address information.

Optionally, the longitude and latitude matching score S1 between the any piece of second address information and the first address information is determined based on the following formula:

$$\llbracket S1 = ke \rrbracket \^{(-d(c1,c2))}$$

where d(cl, c2) indicates a distance between a longitude and latitude c1 corresponding to the any piece of second address information and a longitude and latitude c2 corresponding to the first address information, and k is a constant.
Optionally, the digit substring matching score S2 between the any piece of second address information and the first address information is determined based on the following formula:

$$S2 = pN$$

where N is the maximum number of consecutively identical digit substrings between the any piece of second address information and the first address information, and p is a constant.
The embodiments of the present application provide an account mapping apparatus based on address information, including:

an extracting module configured to extract first address information respectively from multiple pieces of first account information provided by a first service provider and extract second address information respectively from multiple pieces of second account information provided by a second service provider;
a searching module configured to search, for each of the first address information extracted by the extracting module, various pieces of extracted second address information for second address information matching the first address information; and
a mapping module configured to establish, after the searching module finds the second address information matching the first address information, a mapping relation between the first account information to which the first address information belongs and the second account information to which the second address information found by the searching module belongs.

In the embodiments of the present application, it is thus clear that a mapping relation between account information of different account systems is established based on address information included in the account information, and by use of the mapping relation, account information of a user at a second service provider can be positioned based on account information registered by the user at a first service provider, so that service processing related to the second service provider can be completed via a window provided by the first service provider.

**Brief Description of the Drawings**

FIG. 1 is a flowchart of an account mapping method based on address information according to Embodiment 1 of the present application;

FIG. 2 is a flowchart of an account mapping method based on address information according to Embodiment 2 of the present application;

FIG. 3 is a scatter diagram of longitudes and latitudes;

FIG. 4 is a schematic diagram of determination of a candidate second address information set;

FIG. 5 is a flowchart of an account mapping method based on address information according to Embodiment 3 of the present application;

FIG. 6 is a schematic diagram of an address matching framework corresponding to FIG. 5; and

FIG. 7 is a schematic structural diagram of an account mapping apparatus based on address information according to an embodiment of the present application.

**Detailed Description**

In the embodiments of the present application, first address information is extracted respectively from multiple pieces of first account information provided by a first service provider, and second address information is extracted respectively from multiple pieces of second account information provided by a second service provider. For each piece of extracted first address information, various pieces of extracted second address information are searched for second address information matching the first address information. After the second address information matching the first address information is found, a mapping relation between the first account information to which the first address information belongs and the second account information to which the found second address information belongs is established. In the embodiments of the present application, it is thus clear that a mapping relation between account information of different account systems is established based on address information included in the account information, and by use of the mapping relation, account information of a user at a second service provider can be positioned based on account information registered by the user at a first service provider, so that service processing related to the second service provider can be completed via a window provided by the first service provider. For example, when the first service provider is an application service provider and the second service provider is a charging service provider for living payment (water bills, electricity bills, gas bills, and so on), charging items provided by the second service provider can be paid for by using application software provided by the first service provider.

The embodiments of the present application are described below in further detail with reference to the accompanying drawings of the specification.

Embodiment 1

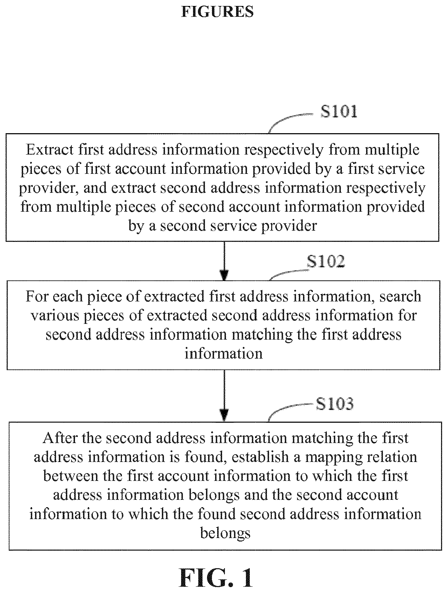

FIG. 1 shows a flowchart of an account mapping method based on address information according to Embodiment 1 of the present application, which includes the following steps:

S101: First address information is extracted respectively from multiple pieces of first account information provided by a first service provider, and second address information is extracted respectively from multiple pieces of second account information provided by a second service provider.

The embodiment of the present application can be performed by a server of the first service provider. The first service provider can be a service provider that provides users with application services, and the first account information of the first service provider can include account numbers registered by the users and first address information such as delivery addresses filled by the users when registering or using the application services.

In some examples, the second service provider can provide second account information of the various users for the first service provider. The second account information here includes account numbers (e.g., payment account numbers), second address information, and the like of the users.

S102: for each piece of extracted first address information, various pieces of extracted second address information are searched for second address information matching the first address information.

Matching second address information is searched for in this step for first address information in each piece of first account information. The first address information matching the second address information here means that addresses indicated by the first address information and the second address information are consistent, which can include a situation where the first address information and the second address information are the same, and also can include a situation where the addresses indicated by the first address information and the second address information are essentially the same although they have different forms of expression. In view of a greater possibility of the second situation, Embodiment 2 of the present application provides an example for searching for the second address information matching the first address information, and reference can be made to the subsequent description of the Embodiment 2 for details.

S103: After the second address information matching the first address information is found, a mapping relation

**EP 3 364 309 B1**

between the first account information to which the first address information belongs and the second account information to which the found second address information belongs is established.

After the second address information matching the first address information is found, a mapping relation between two account systems can be established here based on the address information. That is, it is considered in the embodiment of the present application that two accounts having consistent address information belong to the same user.

The above method is used as follows:

After a service processing request that is related to second account information and triggered by a user is received (for example, the service processing request here is a living expenses payment request, and correspondingly the second account information is living expenses payment account information; nevertheless, it is assumed here that the user does not provide the second account information but only triggers a living expenses payment request), second account information corresponding to first account information of the user is determined based on an established mapping relation and the first account information, and the service processing request is performed for the found second account information.

Embodiment 2

The same address may be described in different manners and different levels of details with different contents in different account systems. Therefore, a success rate for address information matching will be extremely low during address matching if the first address information and the second address information are considered as matching with each other only when they are exactly the same. In view of this, Embodiment 2 of the present application provides a preferred implementation manner for address matching.

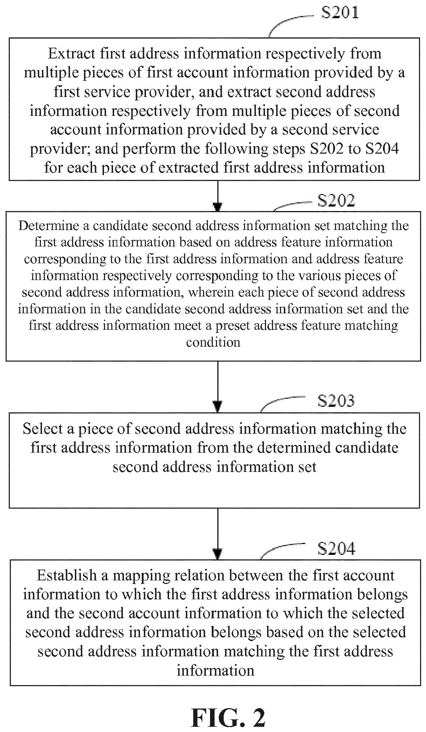

FIG. 2 shows a flowchart of an account mapping method based on address information according to Embodiment 2 of the present application, which includes the following steps:

S201: First address information is extracted respectively from multiple pieces of first account information provided by a first service provider, and second address information is extracted respectively from multiple pieces of second account information provided by a second service provider. The following steps S202 to S204 are performed for each piece of extracted first address information.

S202: A candidate second address information set matching the first address information is determined based on address feature information corresponding to the first address information and address feature information respectively corresponding to the various pieces of second address information, wherein each piece of second address information in the candidate second address information set and the first address information meet a preset address feature matching condition.

During a specific implementation procedure, the address information may probably be manually entered by users. Different users have different entering habits and different habits of using full-width Pinyin, characters, traditional Chinese characters, special symbols and so on, which makes address matching quite difficult. Therefore, these interferences can be removed before the address matching, that is, the format of the address information can be pre-processed. For example, several pre-processing types are listed in Table 1 below.

Table 1

| Pre-processing type | Example |
| --- | --- |
| Transform full-width into half-width | "［" is transformed into "[" |
| Transform Chinese numbers into Arabic numerals | " - 号 楼 (No 1 Building)" is transformed into " 1 号 楼 (No. 1 Building)" |
| Transform traditional Chinese into simplified Chinese | " - 號 樓 (No. 1 Building)" is transformed into " - 号 楼 (No. 1 Building)" |
| Transform uppercase English into lowercase English | "Zone A" is transformed into "Zone a" |
| Special symbol substitution | "No. Ⅲ" is transformed into "No. 3" |

After the first address information and the second address information are pre-processed respectively, the first

6

address information and the second address information are parsed respectively to obtain address feature information respectively corresponding to the first address information and the second address information. The address feature information here can include one or more of longitude and latitude information, POI information, and digit substring information (for example, road number, building number, floor number, and room number are regarded as digit substring information). Each piece of first address information or second address information may have one or more digit substrings. Each digit substring corresponds to a position range of an address, and different digit substrings of the same address correspond to different position ranges of the address. For example, a road number and a building number correspond to different position ranges.

In specific implementation, the longitude and latitude information corresponding to the first address information and the second address information can be found by querying a longitude and latitude library in which a mapping relation between address information and longitudes and latitudes is stored. POI information can be extracted from the first address information and the second address information based on preset keyword information corresponding to the POI information (for example, POI information: No. 256, Tianmushan Road and No. 18, Wantang Road is extracted based on a keyword "road"). In addition, digit substring information can be extracted based on a preset digit substring matching mode (for example, road number, building number, floor number, and room number are matched in sequence).

Suppose that the first address information is "2nd Floor, MM Building, No. 256, Tianmushan Road, Hangzhou City, Zhejiang Province" and the second address information is "2nd Floor, MM Building, No. 18, Wantang Road, Hangzhou City, Zhejiang Province". The first address information is parsed to obtain that the POI information is No. 256, Tianmushan Road and the longitude and latitude is (30.122, 102. 589). Fuzzy matching is adopted to extract road number: No. 256, building number: none, floor number: 2nd floor, and room number: none. Digit substring information of the first address information is 256*2*, wherein * indicates that a position range identified by * has no corresponding digit substring. The second address information is parsed to obtain that the POI information is No. 18, Wantang Road and the longitude and latitude is (30.121, 102.583). Fuzzy matching is adopted to extract road number: No. 18, building number: none, floor number: 2nd floor, and room number: none. Digit substring information of the second address information is 256*2*.

After the address feature information is obtained by parsing the first address information and the second address information respectively, for each piece of first address information, at least one piece of second address information that meets a preset address feature matching condition with the first address information can be searched for based on the preset address feature matching condition, to form a candidate second address information set. The preset address feature matching condition met by any piece of second address information in the candidate second address information set and the first address information includes one or more of the following three conditions:

First condition: a distance between longitudes and latitudes corresponding to the any piece of second address information and the first address information respectively is less than a set distance threshold;
Second condition: POI information corresponding to the any piece of second address information and the first address information respectively is the same; and
Third condition: a maximum value of the number of consecutively identical digit substrings between the any piece of second address information and the first address information is greater than a set number threshold.

For the first condition, longitude and latitude corresponding to the first address information are obtained by parsing the first address information, and longitude and latitude corresponding to the second address information are obtained by parsing the second address information. Obtaining longitudes and latitudes based on address information here can be implemented based on an existing map application.

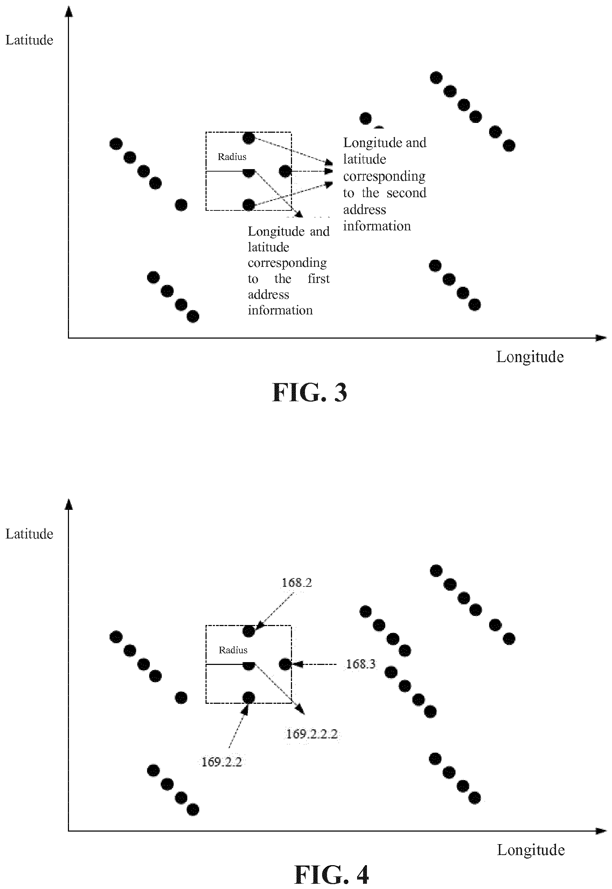

During a specific implementation procedure, a k-d tree can be employed for searching to improve the searching efficiency. A two-dimensional k-d tree (i.e., a 2-d tree) can be employed as searching needs to be conducted based on longitude and latitude points in the embodiment of the present application. FIG. 3 shows a scatter diagram of longitudes and latitudes, in which each dot indicates a longitude and latitude point corresponding to one piece of address information. Lots of computing resources will be wasted if a distance between longitude and latitude corresponding to each piece of extracted second address information and longitude and latitude corresponding to first address information to be matched with the second address information is calculated sequentially by means of traversal. While if the 2-d tree searching manner is employed, only longitudes and latitudes (corresponding to points in a dotted box) of the second address information close to the longitude and latitude corresponding to the first address information need to be selected for calculation. As such, lots of computing resources can be saved.

For the second condition, the POI information can be extracted from the first address information and the second address information respectively. If the POI information extracted respectively is the same, it is considered that the POI information corresponding to the any piece of second address information and the first address information respectively is the same. However, the same address can generally be described in various different manners. Therefore, when the same address is described in different manners in two account systems, POI information extracted from the second address information and the first address information corresponding to the same address may be different.

In view of this, after S201, the POI information in the various pieces of extracted first address information and second address information can be mapped into standardized POI information in a stored postal address library by querying the postal address library.

In S202, the POI information corresponding to the any piece of second address information and the first address information respectively is then determined to be the same based on the following step:

determining that the POI information corresponding to the any piece of second address information and the first address information respectively is the same when the standardized POI information in the postal address library mapped from the any piece of second address information is the same as the standardized POI information in the postal address library mapped from the first address information.

In this manner, after each piece of first address information and second address information are described in a unified manner specified in the postal address library, it is then determined whether POI information of the first address information and the second address information from different account systems is consistent. As such, a success rate for matching the POI information can be increased. For example, the POI information obtained by parsing the first address information is No. 256, Tianmushan Road and the POI information obtained by parsing the second address information is No. 18, Wantang Road in the foregoing example. By querying the postal address library, it is confirmed that No. 256, Tianmushan Road after standardization is Huanglong Times Square and No. 18, Wantang Road after standardization is also Huanglong Times Square. Therefore, it can be considered that the POI information corresponding to the first address information and the second address information respectively is the same.

For the third condition, digit substrings including road number, building number, floor number, and room number can be fuzzily matched from each piece of pre-processed first address information and second address information by using a regular expression. When at least N of the digit substrings of road number, building number, floor number, and room number between the first address information and the second address information are equal in order, it can be considered that the third condition is met, wherein N is the set number threshold.

During a specific implementation procedure, the candidate second address information set can be determined based on any of the above conditions, and can also be determined by combining two or three of the above first to third conditions.

For example, the first condition and the third condition are combined. For first address information "No. 2, Unit 2, Building 2, No. 169, Hanan Avenue, Dongxing District, Neijiang City, Sichuan Province", four digit substrings: 169, 2, 2, and 2 can be fuzzily matched based on a regular expression (the definition of each digit substring here can be preset. For example, the digit substring here is defined sequentially as road number, building number, unit number, and room number based on geographic ranges in descending order). At the same time, longitude and latitude corresponding to the first address information is (29.602631, 105.071571). Assume that a set distance threshold is 3 km, then second address information to be incorporated into a candidate second address information set can be searched for by taking a point corresponding to the longitude and latitude (29.602631, 105.071571) as a center and taking 3 km as a radius. Only three pieces of second address information are found. As shown in FIG. 4, digit substrings of the three pieces of second address information are respectively: 168, 2; 169, 2, 2; and 168, 3, wherein the number of identical digit substrings (i.e., common digit substrings) between the digit substrings 169, 2, 2 and 169, 2, 2, 2 is 3, which is greater than the set number threshold 2. Therefore, only the second address information corresponding to the digit substring 169, 2, 2 is second address information that can be incorporated into the candidate second address information set. If the candidate second address information set is determined in combination with the second condition, the second address information incorporated into the candidate second address information set should further meet: standardized POI information in the postal address library corresponding to the second address information is the same as standardized POI information in the postal address library corresponding to the first address information. For example, standardized POI information in the postal address library corresponding to the second address information incorporated into the candidate second address information set here is "No. 169, Hanan Avenue, Dongxing District, Neijiang City, Sichuan Province", which is the same as standardized POI information in the postal address library corresponding to the first address information.

S203: A piece of second address information matching the first address information is selected from the determined candidate second address information set.

During a specific implementation procedure, when there is only one piece of second address information in the candidate second address information set, the second address information can be used as the finally selected second address information. If there are multiple pieces of second address information in the candidate second address information set, the determined candidate second address information set can be presented to a user in a selection manner such that the user selects a piece of second address information most matching the first address information from the candidate second address information set. In another selection manner, a matching score between each piece of second address information in the candidate second address information set and the first address information is calculated, and a piece of second address information with the highest matching degree is selected based on the calculated matching scores. Please refer to the description in Embodiment 3 for details.

S204: A mapping relation between the first account information to which the first address information belongs and the second account information to which the selected second address information belongs is established based on the selected second address information matching the first address information.

Embodiment 3

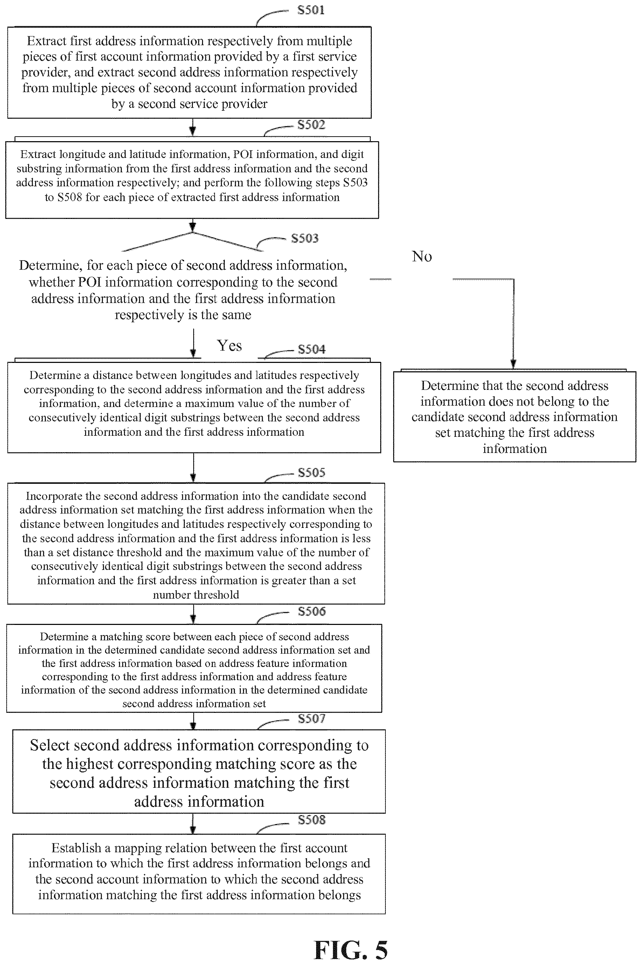

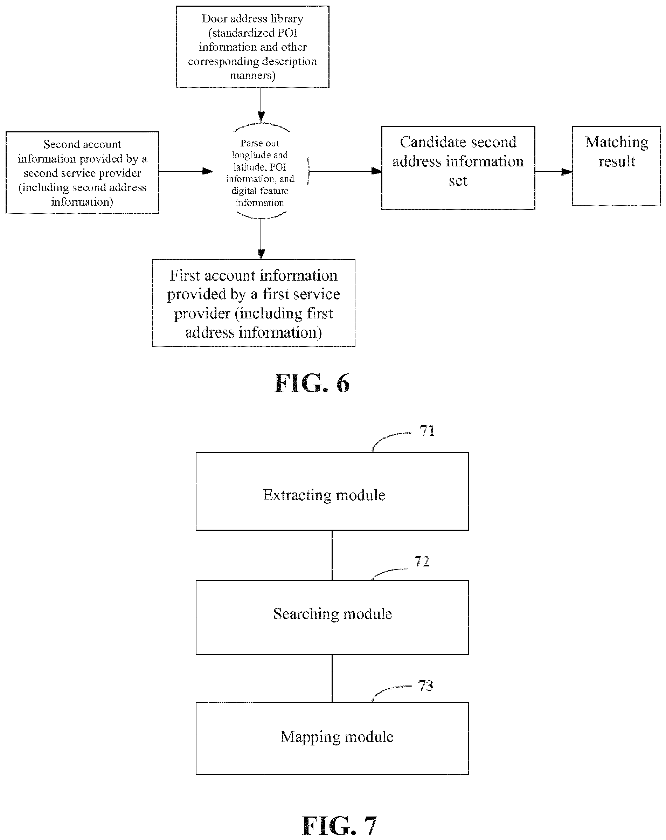

FIG. 5 shows a flowchart of a mapping relation establishment method according to Embodiment 3 of the present application. FIG. 6 is a schematic diagram of an address matching framework corresponding to FIG. 5. The method includes the following steps:
S501: First address information is extracted respectively from multiple pieces of first account information provided by a first service provider, and second address information is extracted respectively from multiple pieces of second account information provided by a second service provider.
After this step, formats of the extracted first address information and second address information can be pre-processed based on a preset pre-processing type. After interferences during address matching are removed, the following steps such as transforming full-width into half-width, transforming Chinese numbers into Arabic numerals, transforming traditional Chinese into simplified Chinese, and transforming uppercase English into lowercase English can be performed.
S502: Longitude and latitude information, POI information, and digit substring information are respectively extracted from each piece of first address information and second address information. The following steps S503 to S508 are performed for each piece of extracted first address information.
S503: It is determined for each piece of second address information whether POI information corresponding to the second address information and the first address information respectively is the same. If yes, S504 is performed. If no, it is determined that the second address information does not belong to the candidate second address information set matching the first address information.
When this step is performed, the POI information in the first address information and the second address information can be standardized first by using a postal address library, and then it is determined whether the standardized PIO information is consistent.
S504: After it is determined that the POI information corresponding to the second address information and the first address information respectively is the same, a distance between longitudes and latitudes respectively corresponding to the second address information and the first address information is determined based on the respective longitude and latitude information of the second address information and the first address information, and a maximum value of the number of consecutively identical digit substrings between the second address information and the first address information is determined based on the respective digit substrings of the second address information and the first address information.
S505: The second address information is incorporated into the candidate second address information set matching the first address information when the distance between longitudes and latitudes respectively corresponding to the second address information and the first address information is less than a set distance threshold and the maximum value of the number of consecutively identical digit substrings between the second address information and the first address information is greater than a set number threshold.
S506: A matching score between each piece of second address information in the determined candidate second address information set and the first address information is determined based on address feature information corresponding to the first address information and address feature information of the second address information in the determined candidate second address information set.
During a specific implementation procedure, for each piece of second address information in the candidate second address information set, a matching score between the second address information and the first address information under each address feature can be determined respectively. The matching scores between the second address information and the first address information under different address features are then added together to serve as a matching score between the second address information and the first address information.
For example, for any piece of second address information in the determined candidate second address information set, a matching score between the any piece of second address information and the first address information can be determined based on a longitude and latitude matching score and a longitude and latitude matching importance degree between the any piece of second address information and the first address information, as well as a digit substring matching score and a digit substring matching importance degree between the any piece of second address information and the first address information.
A matching score S between the any piece of second address information and the first address information here can be determined based on the formula $S = \beta_1 S1 + \beta_2 S2$. $\beta_1$ and $\beta_2$ here are the longitude and latitude matching importance degree and the digit substring matching importance degree respectively, S1 is the longitude and latitude matching score, and S2 is the digit substring matching score. In actual implementation, values of $\beta_1$ and $\beta_2$ can be set based on experience. For example, the value of $\beta_1$ can be 0.3, and the value of $\beta_2$ can be 0.7.
Optionally, the longitude and latitude matching score S1 between the any piece of second address information and the first address information can be determined based on the following formula:

$$S1 = ke^{-d(c1,\ c2)}$$

wherein d(cl, c2) indicates a distance between a longitude and latitude c1 corresponding to the any piece of second address information and a longitude and latitude c2 corresponding to the first address information, and k is a constant.

The digit substring matching score S2 between the any piece of second address information and the first address information can be determined based on the following formula:

$$S2 = pN$$

wherein N is the maximum number of consecutively identical digit substrings between the any piece of second address information and the first address information, and p is a constant.

S507: Second address information corresponding to the highest matching score is selected as the second address information matching the first address information.

S508: A mapping relation between the first account information to which the first address information belongs and the second account information to which the second address information matching the first address information belongs is established.

Based on the same invention concept, an embodiment of the present application further provides a mapping relation establishment apparatus corresponding to the mapping relation establishment method. The principle of the apparatus for solving the problem is similar to that of the mapping relation establishment method in the embodiment of the present application, and therefore, reference can be made to the implementation of the method for the implementation of the apparatus, and repeated content will not be described.

FIG. 7 is a schematic structural diagram of an account mapping apparatus based on address information according to an embodiment of the present application, including:

an extracting module 71 configured to extract first address information respectively from multiple pieces of first account information provided by a first service provider and extract second address information respectively from multiple pieces of second account information provided by a second service provider;

a searching module 72 configured to search, for each piece of first address information extracted by the extracting module 71, various pieces of extracted second address information for second address information matching the first address information; and

a mapping module 73 configured to establish, after the searching module 72 finds the second address information matching the first address information, a mapping relation between the first account information to which the first address information belongs and the second account information to which the second address information found by the searching module belongs.

The searching module 72 is specifically configured to:

determine a candidate second address information set matching the first address information based on address feature information corresponding to the first address information and address feature information respectively corresponding to the various pieces of second address information, wherein each piece of second address information in the candidate second address information set and the first address information meet a preset address feature matching condition; and select a piece of second address information matching the first address information from the determined candidate second address information set.

Optionally, the address feature information includes one or more of longitude and latitude information, POI information, and digit substring information; and

the preset address feature matching condition met by any piece of second address information in the candidate second address information set and the first address information includes one or more of the following conditions:

a distance between longitudes and latitudes corresponding to the any piece of second address information and the first address information respectively is less than a set distance threshold;

POI information corresponding to the any piece of second address information and the first address information respectively is the same; and

a maximum value of the number of consecutively identical digit substrings between the any piece of second address information and the first address information is greater than a set number threshold, wherein each digit substring corresponds to a position range of an address, and different digit substrings of the same address correspond to different position ranges of the address.

Optionally, the searching module 72 is specifically configured to:

if the address feature information includes longitude and latitude information, find longitude and latitude information corresponding to the extracted first address information and second address information by querying a longitude and latitude library in which a mapping relation between address information and longitudes and latitudes is stored;
if the address feature information includes POI information, extract the POI information from the first address information and the second address information based on preset keyword information corresponding to the POI information; and
if the address feature information includes digit substring information, extract the digit substring information from the first address information and the second address information based on a preset digit substring matching mode.

The searching module 72 is further configured to:

after it is determined that POI information exists in the any piece of second address information and the first address information, map the POI information in the any piece of second address information and the first address information into standardized POI information in the postal address library; and
determine that the POI information corresponding to the any piece of second address information and the first address information respectively is the same when the standardized POI information in the postal address library mapped from the any piece of second address information is the same as the standardized POI information in the postal address library mapped from the first address information.

Optionally, the extracting module 71 is specifically configured to:

extract longitude and latitude information, POI information, and digit substring information from various pieces of extracted first address information and second address information respectively; and
the searching module 72 is specifically configured to:
determine, for each piece of second address information, whether POI information corresponding to the second address information and the first address information respectively is the same; after it is determined that the POI information corresponding to the second address information and the first address information respectively is the same, determine a distance between longitudes and latitudes respectively corresponding to the second address information and the first address information based on the respective longitude and latitude information of the second address information and the first address information, and determine a maximum value of the number of consecutively identical digit substrings between the second address information and the first address information based on the respective digit substring information of the second address information and the first address information; and incorporate the second address information into the candidate second address information set matching the first address information when the distance between longitudes and latitudes respectively corresponding to the second address information and the first address information is less than a set distance threshold and the maximum value of the number of consecutively identical digit substrings between the second address information and the first address information is greater than a set number threshold.

Optionally, the searching module 72 is specifically configured to:
determine a matching score between any piece of second address information in the determined candidate second address information set and the first address information based on a longitude and latitude matching score and a longitude and latitude matching importance degree between the any piece of second address information and the first address information, as well as a digit substring matching score and a digit substring matching importance degree between the any piece of second address information and the first address information; and select second address information corresponding to the highest matching score as the second address information matching the first address information.
Optionally, the searching module 72 is specifically configured to determine the longitude and latitude matching score S1 between the any piece of second address information and the first address information based on the following formula:

$$S1 = k\mathrm{e}^{-d(c1,\ c2)}$$

wherein d(cl, c2) indicates a distance between a longitude and latitude c1 corresponding to the any piece of second address information and a longitude and latitude c2 corresponding to the first address information, and k is a constant.

Optionally, the searching module 72 is specifically configured to determine the digit substring matching score S2 between the any piece of second address information and the first address information based on the following formula:

$$S2 = p\text{N}$$

wherein N is the maximum number of consecutively identical digit substrings between the any piece of second address information and the first address information, and p is a constant.

Those skilled in the art should understand that the embodiments of the present application may be provided as a method, a system, or a computer program product. Therefore, the present application may be in a form of a complete hardware embodiment, a complete software embodiment, or an embodiment combining software and hardware. Moreover, the present application may be in a form of a computer program product implemented on one or more computer usable storage media (including, but not limited to, a magnetic disk memory, a CD-ROM, an optical memory, and the like) including computer usable program codes.

The present application is described with reference to flowcharts and/or block diagrams of the method, the apparatus (system) and the computer program product according to the embodiments of the present application. It should be understood that a computer program instruction may be used to implement each process and/or block in the flowcharts and/or block diagrams and combinations thereof. These computer program instructions may be provided to a universal computer, a dedicated computer, an embedded processor or a processor of another programmable data processing device to generate a machine, such that the computer or the processor of another programmable data processing device executes an instruction to generate an apparatus which is configured to implement functions designated in one or more processes in the flowcharts and/or one or more blocks in the block diagrams.

These computer program instructions may also be stored in a computer readable storage that can guide the computer or another programmable data processing device to work in a specific manner, such that the instruction stored in the computer readable storage generates an article of manufacture including an instruction apparatus, and the instruction apparatus implements functions designated in one or more processes in the flowcharts and/or one or more blocks in the block diagrams.

These computer program instructions may also be installed in the computer or another programmable data processing device, such that a series of operation steps are executed on the computer or another programmable device to generate a computer implemented processing, and therefore, the instruction executed in the computer or another programmable device provides steps for implementing functions designated in one or more processes in the flowcharts and/or one or more blocks in the block diagrams.

Preferred embodiments of the present application have been described; however, once knowing basic creative concepts, those skilled in the art can make other variations and modifications to the embodiments. Therefore, the appended claims are intended to be explained as including the preferred embodiments and all variations and modifications falling within the scope of the claims of the present application.

It will be apparent to those skilled in the art that various modifications and variations can be made to the present application without departing from the scope of the present application. As such, it is intended that the present application cover modifications and variations of the present application provided they fall within the scope of the following claims of the present application.

**Claims**

1. A computer implemented method for address information-based account mapping, wherein the method comprises:

    extracting (S201), by a server of a first service provider, a plurality of pieces of first address information from a plurality of pieces of first account information provided by the first service provider;
    extracting (S201), by the server of the first service provider, a plurality of pieces of second address information from a plurality of pieces of second account information provided by a second service provider;
    extracting address feature information from each of the plurality of pieces of extracted first address information and each of the plurality of pieces of extracted second address information;
    mapping the plurality of pieces of extracted first address information and the plurality of pieces of extracted second address information into corresponding standardized point of interest information in a postal address library by querying the postal address library;
    for each piece of extracted first address information, searching the plurality of pieces of extracted second address information for second address information that matches the corresponding piece of the extracted first address information to determine a candidate set of pieces of second address information matching the corresponding piece of the extracted first address information, wherein searching the plurality of pieces includes:

extracting point of interest information from the corresponding piece of first address information and from the plurality of pieces of extracted second address information based on preset keyword information; determining (S202) the candidate set of pieces of second address information matching the corresponding piece of the extracted first address information based on matching first address feature information corresponding to the corresponding piece of the extracted first address information and second address feature information respectively corresponding to each of the plurality of pieces of second address information according to a preset address feature matching condition, wherein the first and the second address feature information include at least the point of interest information, and wherein the preset address feature matching condition requires that point of interest information corresponding to any piece of second address information in the candidate set and the corresponding piece of the extracted first address information respectively is consistent, wherein second address information and the first address information are consistent if i) the first address information and the second address information have the same form of expression or ii) when the first address information and the second address information have different forms of expression but indicate the same address, wherein that the first address information and the second address information are determined to indicate the same address when the standardized point of interest information in the postal address library mapped from the second address information is the same as the standardized point of interest information in the postal address library mapped from the first address information;

selecting (S203) a piece of second address information matching the corresponding piece of first address information from the determined candidate set of pieces of second address information; and after the selected piece of the second address information that matches the corresponding first address information is selected from the candidate set of pieces of second address information, establishing (S204), by the server, a mapping relationship between first account information that comprises the corresponding piece of first address information and a piece of the second account information that comprises the selected piece of the second address information.

2.  The method according to claim 1, further comprising:

extracting address feature information including latitude and longitude information and numeric substring information from each of the plurality of pieces of extracted first address information and each of the plurality of pieces of extracted second address information; and wherein the preset address feature matching condition defines that the first address information and any piece of second address information in the candidate set of pieces of second address information satisfies one or more of the following conditions comprising:

a distance between latitude and longitude of a piece from the second address information from the set and those of the first address information is less than a predetermined distance threshold; and a maximum quantity of same consecutive numeric substrings between the second address information and the first address information is greater than a predetermined quantity threshold, wherein each numeric substring corresponds to a location range of an address, and different numeric substrings of a same address correspond to different location ranges of the address.

3.  The method according to any of the preceding claims, wherein determining the candidate set of pieces of second address information matching the corresponding piece of first address information based on the address feature information corresponding to the piece of first address information and the address feature information respectively corresponding to the plurality of pieces of second address information further comprises:

after it is determined that the point of interest information corresponding to the second address information is the same as the point of interest information corresponding to the first address information:

determining, based on latitude and longitude information in the second address information and latitude and longitude information in the first address information, a distance between the latitude and longitude corresponding to the second address information and the latitude and longitude corresponding to the first address information, and determining, based on numeric substring information in the second address information and numeric substring information in the piece of the first address information, a maximum quantity of same consecutive numeric substrings between the second address information and the first address information; and

when the distance between the latitude and longitude corresponding to the second address information and the latitude and longitude corresponding to first address information is less than a predetermined distance threshold, and the maximum quantity of same consecutive numeric substrings between the second address information and the first address information is greater than a predetermined quantity threshold, selecting the second address information into the candidate set of pieces of second address information that matches the first address information.

4. The method according to claim 3, further comprising:
if there are multiple pieces of the second address information in the candidate set of pieces of second address information:

calculating a matching score between each piece of second address information in the candidate set of pieces of second address information and the first address information, and
selecting a piece from the multiple pieces of the second address information that is with the highest matching score based on the calculated matching scores.

5. The method according to claim 3, wherein selecting, from the determined candidate set of pieces of second address information, the piece of second address information that matches the first address information comprises:

for any piece of second address information in the determined candidate set of pieces of second address information, determining a matching value between the piece of second address information and the first address information based on a latitude and longitude matching value and latitude and longitude matching significance between the second address information and the first address information, and a numeric substring matching value and a numeric substring matching significance between the second address information and the first address information; and
selecting a piece of second address information from the multiple pieces of the second address information in the candidate set that has a highest matching value as the second address information that matches the first address information.

6. The method according to claim 5, wherein the latitude and longitude matching value S1 between any piece of the second address information and the first address information is determined using the following equation:

$$S1 = ke^{-d(c1,\ c2)},$$

wherein $d(cl, c2)$ represents a distance between latitude and longitude, c1, corresponds to the any piece of second address information and the latitude and longitude, c2, corresponds to the first address information, and k represents a constant.

7. The method according to claim 5, wherein the numeric substring matching value S2 between any piece of second address information and the first address information is determined based on the following equation:

$$S2 = pN,$$

wherein N represents a maximum quantity of same consecutive numeric substrings between the any piece of the second address information and the first address information, and p represents a constant.

8. The method according to claim 1, wherein for each piece of extracted first address information, searching the plurality of pieces of extracted second address information for second address information that matches the first address information to determine the candidate set of pieces of second address information matching the first address information comprises:
searching, using a k-d tree, the plurality of pieces of extracted second address information for the second address information that matches the first address information.

9. The method according to claim 1, wherein after extracting the first address information and the second address information, and before the searching for matching pieces from the plurality of pieces of the second address information that matches the first address information, the method further comprises:
pre-processing formats of the extracted first address information and second address information according to a predetermined pre-processing type.

10. The method of claim 1, further comprising:

   receiving a service processing request from a user at a first service provider in relation to an account at a second service provider associated with the user; and
   locating, at the first service provider, an account of the user at the second service provider based on the established mapping relationship and account information registered by the user with the first service provider.

11. The method of claim 10, further comprising:
performing the service processing requests at the first service provider for the located account of the user at the second service provider.

12. An address information-based account mapping system, wherein the system includes hardware, software, or combination of hardware and software, and wherein the system comprises:

   a computer processing device; and
   a computer readable storage having instructions stored thereon which when executed by the computer processing device, cause the computer processing device to perform the operations of the method according to any one of claims 1 to 11.


**Patentansprüche**

1. Computerimplementiertes Verfahren zur auf Adresseninformationen basierenden Kontozuordnung, wobei das Verfahren Folgendes umfasst:

   Extrahieren (S201) einer Vielzahl erster Adresseninformationen aus einer Vielzahl erster Kontoinformationen, die durch einen ersten Diensteanbieter bereitgestellt werden, durch einen Server des ersten Diensteanbieters;
   Extrahieren (S201) einer Vielzahl zweiter Adresseninformationen aus einer Vielzahl zweiter Kontoinformationen, die durch einen zweiten Diensteanbieter bereitgestellt werden, durch den Server des ersten Diensteanbieters;
   Extrahieren von Adressenmerkmalsinformationen aus jeder der Vielzahl extrahierter erster Adresseninformationen und jeder der Vielzahl extrahierter zweiter Adresseninformationen;
   Zuordnen der Vielzahl extrahierter erster Adresseninformationen und der Vielzahl extrahierter zweiter Adresseninformationen zu korrespondierenden standardisierten Point-Of-Interest-Informationen in einer Postadressenbibliothek durch Abfragen der Postadressenbibliothek;
   für jede extrahierte erste Adresseninformation Durchsuchen der Vielzahl extrahierter zweiter Adresseninformationen nach zweiten Adresseninformationen, die mit der korrespondierenden extrahierten ersten Adresseninformation übereinstimmen, um einen in Frage kommenden Satz zweiter Adresseninformationen, der mit der korrespondierenden extrahierten ersten Adresseninformation übereinstimmt, zu bestimmen, wobei das Durchsuchen der Vielzahl von Adresseninformationen Folgendes enthält:

      Extrahieren von Point-Of-Interest-Informationen aus der korrespondierenden ersten Adresseninformation und aus der Vielzahl extrahierter zweiter Adresseninformationen basierend auf vorgegebenen Stichwortinformationen;
      Bestimmen (S202) des in Frage kommenden Satzes zweiter Adresseninformationen, der mit der korrespondierenden extrahierten ersten Adresseninformation übereinstimmt, basierend auf übereinstimmenden ersten Adressenmerkmalsinformationen, die mit der korrespondierenden extrahierten ersten Adresseninformation korrespondieren, bzw. zweiten Adressenmerkmalsinformationen, die mit jeder der Vielzahl zweiter Adresseninformationen korrespondieren, gemäß einer vorgegebenen Adressenmerkmalsübereinstimmungsbedingung, wobei die ersten und die zweiten Adressenmerkmalsinformationen mindestens die Point-Of-Interest-Informationen enthalten und wobei die vorgegebene Adressenmerkmalsübereinstimmungsbedingung voraussetzt, dass Point-Of-Interest-Informationen, die mit einer beliebigen zweiten Adresseninformation in dem in Frage kommenden Satz und der korrespondierenden extrahierten ersten Adresseninformation korrespondieren, konsistent sind, wobei zweite Adresseninformationen und die ersten Adresseninformationen konsistent sind, i) falls die ersten Adresseninformationen und die zweiten Adresseninformationen dieselbe Ausdrucksform aufweisen oder ii) wenn die ersten Adresseninformationen und die zweiten Adresseninformationen unterschiedliche Ausdrucksformen aufweisen, jedoch dieselbe Adresse anzeigen, wobei die ersten Adresseninformationen und die zweiten Adresseninformationen bestimmt werden, um dieselbe Adresse anzuzeigen, wenn die standardisierten Point-Of-Interest-Informationen in der Postadressenbibliothek, die aus den zweiten Adresseninformationen zugeordnet werden, gleich den standardisierten Point-Of-Interest-Informationen in der Postadressenbibliothek, die aus den ersten Adresseninformationen zugeordnet werden, sind;

Auswählen (S203) einer zweiten Adresseninformation, die mit der korrespondierenden ersten Adresseninformation übereinstimmt, aus dem bestimmten in Frage kommenden Satz zweiter Adresseninformationen; und, nachdem die ausgewählte zweite Adresseninformation, die mit den korrespondierenden ersten Adresseninformationen übereinstimmt, aus dem in Frage kommenden Satz zweiter Adresseninformationen ausgewählt worden ist, Herstellen (S204) einer Zuordnungsbeziehung zwischen ersten Kontoinformationen, die die korrespondierende erste Adresseninformation umfassen, und einer der zweiten Kontoinformationen, die die ausgewählte zweite Adresseninformation umfasst, durch den Server.

2. Verfahren nach Anspruch 1, das ferner Folgendes umfasst:

Extrahieren von Adressenmerkmalsinformationen, die Breite- und Länge-Informationen und Informationen zu numerischen Teilzeichenfolgen enthalten, aus jeder der Vielzahl extrahierter erster Adresseninformationen und jeder der Vielzahl extrahierter zweiter Adresseninformationen;
wobei die vorgegebene Adressenmerkmalsübereinstimmungsbedingung definiert, dass die ersten Adresseninformationen und eine beliebige zweite Adresseninformation in dem in Frage kommenden Satz zweiter Adresseninformationen eine oder mehrere der folgenden Bedingungen erfüllen, die Folgendes umfassen:

ein Abstand zwischen einer Breite und einer Länge einer aus den zweiten Adresseninformationen aus dem Satz und denjenigen der ersten Adresseninformationen ist kleiner als ein vorher bestimmter Abstandsschwellenwert; und
eine maximale Menge gleicher aufeinanderfolgender numerischer Teilzeichenfolgen zwischen den zweiten Adresseninformationen und den ersten Adresseninformationen ist größer als ein vorher bestimmter Mengenschwellenwert, wobei jede numerische Teilzeichenfolge mit einem Ortsbereich einer Adresse korrespondiert und unterschiedliche numerische Teilzeichenfolgen einer selben Adresse mit unterschiedlichen Ortsbereichen der Adresse korrespondieren.

3. Verfahren nach einem der vorhergehenden Ansprüche, wobei das Bestimmen des in Frage kommenden Satzes zweiter Adresseninformationen, der mit der korrespondierenden ersten Adresseninformation übereinstimmt, basierend auf den Adressenmerkmalsinformationen, die mit der ersten Adresseninformation korrespondieren, bzw. den Adressenmerkmalsinformationen, die mit der Vielzahl zweiter Adresseninformationen korrespondieren, ferner Folgendes umfasst:

nachdem bestimmt worden ist, dass die Point-Of-Interest-Informationen, die mit den zweiten Adresseninformationen korrespondieren, gleich den Point-Of-Interest-Informationen, die mit den ersten Adresseninformationen korrespondieren, sind:

Bestimmen eines Abstands zwischen der Breite und der Länge, die mit den zweiten Adresseninformationen korrespondieren, und der Breite und der Länge, die mit den ersten Adresseninformationen korrespondieren, basierend auf Breite- und Länge-Informationen in den zweiten Adresseninformationen und Breite- und Länge-Informationen in den ersten Adresseninformationen und
Bestimmen einer maximalen Menge gleicher aufeinanderfolgender numerischer Teilzeichenfolgen zwischen den zweiten Adresseninformationen und den ersten Adresseninformationen basierend auf Informationen zu numerischen Teilzeichenfolgen in den zweiten Adresseninformationen und Informationen zu numerischen Teilzeichenfolgen in der ersten Adresseninformation; und,

wenn der Abstand zwischen der Breite und der Länge, die mit den zweiten Adresseninformationen korrespondieren, und der Breite und der Länge, die mit ersten Adresseninformationen korrespondieren, kleiner als ein vorher bestimmter Abstandsschwellenwert ist und die maximale Menge gleicher aufeinanderfolgender numerischer Teilzeichenfolgen zwischen den zweiten Adresseninformationen und den ersten Adresseninformationen größer als ein vorher bestimmter Mengenschwellenwert ist, Auswählen der zweiten Adresseninformationen für den in Frage kommenden Satz zweiter Adresseninformationen, der mit den ersten Adresseninformationen übereinstimmt.

4. Verfahren nach Anspruch 3, das ferner Folgendes umfasst:
falls in dem in Frage kommenden Satz zweiter Adresseninformationen mehrere der zweiten Adresseninformationen sind:

Berechnen eines Ergebnisses einer Übereinstimmung zwischen jeder zweiten Adresseninformation in dem in Frage kommenden Satz zweiter Adresseninformationen und den ersten Adresseninformationen und Auswählen einer aus den mehreren der zweiten Adresseninformationen mit dem höchsten Ergebnis einer Übereinstimmung basierend auf den berechneten Ergebnissen einer Übereinstimmung.

5. Verfahren nach Anspruch 3, wobei das Auswählen der zweiten Adresseninformation, die mit den ersten Adresseninformationen übereinstimmt, aus dem bestimmten in Frage kommenden Satz zweiter Adresseninformationen Folgendes umfasst:

für eine beliebige zweite Adresseninformation in dem bestimmten in Frage kommenden Satz zweiter Adresseninformationen Bestimmen eines Werts einer Übereinstimmung zwischen der zweiten Adresseninformation und den ersten Adresseninformationen basierend auf einem Wert einer Breite- und Längeübereinstimmung und einer Signifikanz einer Breite- und Längeübereinstimmung zwischen den zweiten Adresseninformationen und den ersten Adresseninformationen und einem Wert einer Übereinstimmung numerischer Teilzeichenfolgen und einer Signifikanz einer Übereinstimmung numerischer Teilzeichenfolgen zwischen den zweiten Adresseninformationen und den ersten Adresseninformationen; und
Auswählen einer zweiten Adresseninformation aus den mehreren zweiten Adresseninformationen in dem in Frage kommenden Satz mit dem höchsten Wert einer Übereinstimmung als die zweiten Adresseninformationen, die mit den ersten Adresseninformationen übereinstimmen.

6. Verfahren nach Anspruch 5, wobei S1 als der Wert einer Breite- und Längeübereinstimmung zwischen einer beliebigen zweiten Adresseninformation und den ersten Adresseninformationen unter Nutzung der folgenden Gleichung bestimmt wird:

$$S1 = ke^{-d(c1,c2)},$$

wobei d(c1,c2) für einen Abstand zwischen einer Breite und einer Länge steht, c1 mit der beliebigen zweiten Adresseninformation und der Breite und der Länge korrespondiert, c2 mit den ersten Adresseninformationen korrespondiert und k für eine Konstante steht.

7. Verfahren nach Anspruch 5, wobei S2 als der Wert einer Übereinstimmung numerischer Teilzeichenfolgen zwischen einer beliebigen zweiten Adresseninformation und den ersten Adresseninformationen basierend auf der folgenden Gleichung bestimmt wird:

$$S2 = pN$$

Wobei N für eine maximale Menge gleicher aufeinanderfolgender numerischer Teilzeichenfolgen zwischen der beliebigen zweiten Adresseninformation und den ersten Adresseninformationen steht und p für eine Konstante steht.

8. Verfahren nach Anspruch 1, wobei das Durchsuchen der Vielzahl extrahierter zweiter Adresseninformationen nach zweiten Adresseninformationen, die mit den ersten Adresseninformationen übereinstimmen, um den in Frage kommenden Satz zweiter Adresseninformationen, die mit den ersten Adresseninformation übereinstimmen, zu bestimmen, für jede extrahierte erste Adresseninformation Folgendes umfasst:
Durchsuchen der Vielzahl extrahierter zweiter Adresseninformationen nach den zweiten Adresseninformationen, die mit den ersten Adresseninformationen übereinstimmen, unter Nutzung eines k-d-Baums.

9. Verfahren nach Anspruch 1, wobei das Verfahren nach dem Extrahieren der ersten Adresseninformationen und der zweiten Adresseninformationen und vor dem Durchsuchen nach übereinstimmenden Adresseninformationen aus der Vielzahl der zweiten Adresseninformationen, die mit den ersten Adresseninformationen übereinstimmen, ferner Folgendes umfasst:
Vorverarbeiten von Formaten der extrahierten ersten Adresseninformationen und zweiten Adresseninformationen gemäß einem vorher bestimmten Vorverarbeitungstyp.

10. Verfahren nach Anspruch 1, das ferner Folgendes umfasst:

Empfangen einer Dienstverarbeitungsanforderung von einem Benutzer bei einem ersten Diensteanbieter mit Bezug auf ein Konto bei einem zweiten Diensteanbieter, der mit dem Benutzer assoziiert ist; und
beim ersten Diensteanbieter Ermitteln eines Kontos des Benutzers beim zweiten Diensteanbieter basierend auf der hergestellten Zuordnungsbeziehung und Kontoinformationen, die vom Benutzer bei dem ersten Diensteanbieter registriert worden sind.

11. Verfahren nach Anspruch 10, das ferner Folgendes umfasst:
Durchführen der Dienstverarbeitungsanforderungen beim ersten Diensteanbieter für das ermittelte Konto des Benutzers beim zweiten Diensteanbieter.

12. System zur auf Adresseninformationen basierenden Kontozuordnung, wobei das System Hardware, Software oder eine Kombination von Hardware und Software enthält und wobei das System Folgendes umfasst:

eine Computerverarbeitungseinrichtung; und
einen computerlesbaren Speicher, der darin gespeicherte Anweisungen aufweist, die, wenn sie durch die Computerverarbeitungseinrichtung laufen gelassen werden, bewirken, dass die Computerverarbeitungseinrichtung die Vorgänge des Verfahrens nach einem der Ansprüche 1 bis 11 durchführt.

## Revendications

1. Procédé mis en œuvre par ordinateur pour une mise en concordance de comptes basés sur une information d'adresse, le procédé comprenant les étapes consistant à :

extraire (S201), par un serveur d'un premier fournisseur de services, une pluralité d'éléments de première information d'adresse d'une pluralité d'éléments de première information de compte fournis par le premier fournisseur de services ;
extraire (S201), par le serveur du premier fournisseur de services, une pluralité d'éléments de seconde information d'adresse d'une pluralité d'éléments de seconde information de compte fournis par un second fournisseur de services ;
extraire une information d'attribut d'adresse de chaque élément de la pluralité d'éléments de première information d'adresse extraite et de chaque élément de la pluralité d'éléments de seconde information d'adresse extraite ;
faire concorder la pluralité d'éléments de première information d'adresse extraite et la pluralité d'éléments de seconde information d'adresse extraite avec une information de point d'intérêt standardisée correspondante dans une bibliothèque d'adresses postales en requêtant la bibliothèque d'adresses postales ;
pour chaque élément de première information d'adresse extraite, rechercher dans la pluralité d'éléments de seconde information d'adresse extraite une seconde information d'adresse qui concorde avec l'élément correspondant de la première information d'adresse extraite pour déterminer un ensemble candidat d'éléments de seconde information d'adresse qui concorde avec l'élément correspondant de la première information d'adresse extraite, la recherche dans la pluralité d'éléments incluant les étapes consistant à :

extraire une information de point d'intérêt de l'élément correspondant de première information d'adresse et de la pluralité d'éléments de seconde information d'adresse extraite sur la base d'une information de mot-clé prédéfinie ;
déterminer (S202) l'ensemble candidat d'éléments de seconde information d'adresse qui concorde avec l'élément correspondant de la première information d'adresse extraite sur la base d'une première information d'attribut d'adresse concordante qui correspond à l'élément correspondant de la première information d'adresse extraite et d'une seconde information d'attribut d'adresse qui correspond respectivement à chaque élément de la pluralité d'éléments de seconde information d'adresse selon une condition de concordance d'attribut d'adresse prédéfinie, la première et la seconde information d'attribut d'adresse incluant au moins l'information de point d'intérêt, et la condition de concordance d'attribut d'adresse prédéfinie exigeant que cette information de point d'intérêt qui correspond à n'importe quel élément de seconde information d'adresse dans l'ensemble candidat et, respectivement, que l'élément correspondant de la première information d'adresse extraite soient cohérents, la seconde information d'adresse et la première information d'adresse étant cohérentes si i) la première information d'adresse et la seconde information d'adresse ont la même forme d'expression ou ii) quand la première information d'adresse et la seconde information d'adresse ont différentes formes d'expression mais indiquent la même adresse, la première information d'adresse et la seconde information d'adresse étant déterminées comme indiquant la même adresse quand l'information de point d'intérêt standardisée dans la bibliothèque d'adresses postales mise en concordance à partir de la seconde information d'adresse est la même que l'information de point d'intérêt standardisée dans la bibliothèque d'adresses postales mise en concordance à partir de la première information d'adresse ;

sélectionner (S203) un élément de seconde information d'adresse qui concorde avec l'élément correspondant de première information d'adresse dans l'ensemble candidat déterminé d'éléments de seconde information d'adresse ; et
après la sélection de l'élément sélectionné de la seconde information d'adresse qui concorde avec la première information d'adresse correspondante dans l'ensemble candidat d'éléments de seconde information d'adresse, établir (S204), par le serveur, une relation de concordance entre une première information de compte qui comprend l'élément correspondant de première information d'adresse et un élément de la seconde information de compte qui comprend l'élément sélectionné de la seconde information d'adresse.

**2.** Procédé selon la revendication 1, comprenant en outre l'étape consistant à :

extraire une information d'attribut d'adresse, incluant une information de latitude et de longitude et une information de sous-chaîne numérique, de chaque élément de la pluralité d'éléments de première information d'adresse extraite et de chaque élément de la pluralité d'éléments de seconde information d'adresse extraite ; et
la condition de concordance d'attributs d'adresse prédéfinie définissant que la première information d'adresse et n'importe quel élément de seconde information d'adresse dans l'ensemble candidat d'éléments de seconde information d'adresse satisfont à une ou plusieurs des conditions suivantes comprenant :

une distance entre une latitude et une longitude d'un élément de la seconde information d'adresse de l'ensemble et celles de la première information d'adresse est inférieure à un seuil de distance prédéterminé ; et
un nombre maximum de mêmes sous-chaînes numériques consécutives entre la seconde information d'adresse et la première information d'adresse est supérieur à un seuil de nombre prédéterminé, chaque sous-chaîne numérique correspondant à une plage de localisation d'une adresse, et différentes sous-chaînes numériques d'une même adresse correspondent à différentes plages de localisation de l'adresse.

**3.** Procédé selon l'une quelconque des revendications précédentes, dans lequel la détermination de l'ensemble candidat d'éléments de seconde information d'adresse qui concordent avec l'élément correspondant de première information d'adresse sur la base de l'information d'attribut d'adresse qui correspond à l'élément de première information d'adresse et de l'information d'attribut d'adresse qui correspond respectivement à la pluralité d'éléments de seconde information d'adresse comprend les étapes consistant à :

après la détermination du fait que l'information de point d'intérêt qui correspond à la seconde information d'adresse est la même que l'information de point d'intérêt qui correspond à la première information d'adresse :

déterminer, sur la base d'une information de latitude et de longitude dans la seconde information d'adresse et d'une information de latitude et de longitude dans la première information d'adresse, une distance entre la latitude et la longitude qui correspondent à la seconde information d'adresse et la latitude et la longitude qui correspondent à la première information d'adresse, et
déterminer, sur la base d'une information de sous-chaîne numérique dans la seconde information d'adresse et d'une information de sous-chaîne numérique dans l'élément de la première information d'adresse, un nombre maximum de mêmes sous-chaînes numériques consécutives entre la seconde information d'adresse et la première information d'adresse ; et

quand la distance entre la latitude et la longitude qui correspondent à la seconde information d'adresse et la latitude et la longitude qui correspondent à la première information d'adresse est inférieure à un seuil de distance prédéterminé et quand le nombre maximum de mêmes sous-chaînes numériques consécutives entre la seconde information d'adresse et la première information d'adresse est supérieur à un seuil de nombre prédéterminé, sélectionner dans l'ensemble candidat d'éléments de seconde information d'adresse la seconde information d'adresse qui concorde avec la première information d'adresse.

4. Procédé selon la revendication 3, comprenant en outre les étapes consistant à :
s'il y a de multiples éléments de la seconde information d'adresse dans l'ensemble candidat d'éléments de seconde information d'adresse :

> calculer un score de concordance entre chaque élément de seconde information d'adresse dans l'ensemble candidat d'éléments de seconde information d'adresse et la première information d'adresse, et
> sélectionner, parmi les multiples éléments de la seconde information d'adresse, un élément qui a le score de concordance maximum sur la base des scores de concordance calculés.

5. Procédé selon la revendication 3, dans lequel la sélection, dans l'ensemble candidat d'éléments de seconde information d'adresse, de l'élément de seconde information d'adresse qui concorde avec la première information d'adresse comprend les étapes consistant à :

> pour n'importe quel élément de seconde information d'adresse dans l'ensemble candidat déterminé d'éléments de seconde information d'adresse, déterminer une valeur de concordance entre l'élément de seconde information d'adresse et la première information d'adresse sur la base d'une valeur de concordance de latitude et de longitude et d'une importance de concordance de latitude et de longitude entre la seconde information d'adresse et la première information d'adresse, et d'une valeur de concordance de sous-chaîne numérique et d'une importance de concordance de sous-chaîne numérique entre la seconde information d'adresse et la première information d'adresse ; et
> sélectionner, parmi les multiples éléments de la seconde information d'adresse dans l'ensemble candidat, un élément de seconde information d'adresse qui a une valeur de concordance maximale en guise de seconde information d'adresse qui concorde avec la première information d'adresse.

6. Procédé selon la revendication 5, dans lequel la valeur de concordance de latitude et de longitude S1 entre n'importe quel élément de la seconde information d'adresse et la première information d'adresse est déterminée au moyen de l'équation suivante :

$$S1 = ke^{-d(c1,c2)},$$

où $d(cl, c2)$ représente une distance entre latitude et longitude, c1 correspond au n'importe quel élément de seconde information d'adresse et à la latitude et longitude, c2 correspond à la première information d'adresse et k représente une constante.

7. Procédé selon la revendication 5, dans lequel la valeur de concordance de sous-chaîne numérique S2 entre n'importe quel élément de seconde information d'adresse et la première information d'adresse est déterminée sur la base de l'équation suivante :

$$S2 = pN,$$

où N représente un nombre maximum de mêmes sous-chaînes numériques consécutives entre le n'importe quel élément de la seconde information d'adresse et la première information d'adresse et p représente une constante.

8. Procédé selon la revendication 1, dans lequel, pour chaque élément de première information d'adresse extraite, la recherche, dans la pluralité d'éléments de seconde information d'adresse extraite, d'une seconde information d'adresse qui concorde avec la première information d'adresse pour déterminer l'ensemble candidat d'éléments de seconde information d'adresse qui concorde avec la première information d'adresse comprend l'étape consistant à :
rechercher, au moyen d'un arbre k-d, dans la pluralité d'éléments de seconde information d'adresse extraite, la seconde information d'adresse qui concorde avec la première information d'adresse.

9. Procédé selon la revendication 1, le procédé comprenant en outre, après l'extraction de la première information d'adresse et de la seconde information d'adresse, et avant la recherche d'éléments concordants dans la pluralité d'éléments de la seconde information d'adresse qui concorde avec la première information d'adresse, l'étape consistant à :

prétraiter des formats de la première information d'adresse et de la seconde information d'adresse extraites selon un type de prétraitement prédéterminé.

10. Procédé selon la revendication 1, comprenant en outre les étapes consistant à :

recevoir une demande de traitement de service en provenance d'un utilisateur au niveau d'un premier fournisseur de services en rapport avec un compte au niveau d'un second fournisseur de services associé à l'utilisateur ; et localiser, au niveau du premier fournisseur de services, un compte de l'utilisateur au niveau du second fournisseur de services sur la base de la relation de concordance établie et d'une information de compte enregistrée par l'utilisateur auprès du premier fournisseur de services.

11. Procédé selon la revendication 10, comprenant en outre l'étape consistant à :
réaliser les demandes de traitement de service au niveau du premier fournisseur de services pour le compte localisé de l'utilisateur au niveau du second fournisseur de services.

12. Système de mise en concordance de comptes sur la base d'une information d'adresse, le système incluant un matériel, un logiciel ou une combinaison d'un matériel et d'un logiciel, et le système comprenant :

un dispositif de traitement informatique ; et
un stockage lisible par ordinateur sur lequel sont stockées des instructions qui, lorsqu'elles sont exécutées par le dispositif de traitement informatique, amènent le dispositif de traitement informatique à réaliser les opérations du procédé selon l'une quelconque des revendications 1 à 11.

FIGURES

S101

Extract first address information respectively from multiple pieces of first account information provided by a first service provider, and extract second address information respectively from multiple pieces of second account information provided by a second service provider

S102

For each piece of extracted first address information, search various pieces of extracted second address information for second address information matching the first address information

S103

After the second address information matching the first address information is found, establish a mapping relation between the first account information to which the first address information belongs and the second account information to which the found second address information belongs

FIG. 1

S201

Extract first address information respectively from multiple pieces of first account information provided by a first service provider, and extract second address information respectively from multiple pieces of second account information provided by a second service provider; and perform the following steps S202 to S204 for each piece of extracted first address information

S202

Determine a candidate second address information set matching the first address information based on address feature information corresponding to the first address information and address feature information respectively corresponding to the various pieces of second address information, wherein each piece of second address information in the candidate second address information set and the first address information meet a preset address feature matching condition

S203

Select a piece of second address information matching the first address information from the determined candidate second address information set

S204

Establish a mapping relation between the first account information to which the first address information belongs and the second account information to which the selected second address information belongs based on the selected second address information matching the first address information

**FIG. 2**

Latitude

Radius

Longitude and latitude corresponding to the second address information

Longitude and latitude corresponding to the first address information

Longitude

**FIG. 3**

Latitude

168.2

Radius

168.3

169.2.2.2

169.2.2

Longitude

**FIG. 4**

S501

Extract first address information respectively from multiple pieces of first account information provided by a first service provider, and extract second address information respectively from multiple pieces of second account information provided by a second service provider

S502

Extract longitude and latitude information, POI information, and digit substring information from the first address information and the second address information respectively; and perform the following steps S503 to S508 for each piece of extracted first address information

S503

Determine, for each piece of second address information, whether POI information corresponding to the second address information and the first address information respectively is the same

No

Yes S504

Determine a distance between longitudes and latitudes respectively corresponding to the second address information and the first address information, and determine a maximum value of the number of consecutively identical digit substrings between the second address information and the first address information

Determine that the second address information does not belong to the candidate second address information set matching the first address information

S505

Incorporate the second address information into the candidate second address information set matching the first address information when the distance between longitudes and latitudes respectively corresponding to the second address information and the first address information is less than a set distance threshold and the maximum value of the number of consecutively identical digit substrings between the second address information and the first address information is greater than a set number threshold

S506

Determine a matching score between each piece of second address information in the determined candidate second address information set and the first address information based on address feature information corresponding to the first address information and address feature information of the second address information in the determined candidate second address information set

S507

Select second address information corresponding to the highest corresponding matching score as the second address information matching the first address information

S508

Establish a mapping relation between the first account information to which the first address information belongs and the second account information to which the second address information matching the first address information belongs

FIG. 5

Door address library
(standardized POI
information and other
corresponding description
manners)

Second account
information provided by a
second service provider
(including second address
information)

Parse out
longitude and
latitude, POI
information, and
digital feature
information

Candidate second
address information
set

Matching
result

First account information
provided by a first service
provider (including first
address information)

# FIG. 6

71

Extracting module

72

Searching module

73

Mapping module

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510661892

**Non-patent literature cited in the description**

- **OANA GOGA.** Matching user accounts across online social networks: methods and applications. *COMPUTER SCIENCE, LIP6,* 21 May 2014